# EUROPEAN PATENT SPECIFICATION

(11) **EP 2 727 824 B1**
(45) Date of publication and mention of the grant of the patent: **10.08.2016**
(21) Application number: 12798784.0
(22) Date of filing: 28.06.2012
(51) Int. Cl.: B64C 1/26, B64C 5/06

(54) **REINFORCED AIRCRAFT FUSELAGE**
VERSTÄRKTER FLUGZEUGRUMPF
FUSELAGE D'AÉRONEF RENFORCÉ

(30) Priority: 01.07.2011 ES 201131120 P
(43) Date of publication of application: 07.05.2014
(73) Proprietor: Airbus Operations, S.L., 28906 Getafe Madrid (ES)
(72) Inventor: LLAMAS SANDÍN, Raúl Carlos, E-28906 Getafe (ES); MARTÍNEZ MUÑOZ, José Luis, E-28906 Getafe (ES)
(74) Representative: Elzaburu S.L.P.
(86) International application number: PCT/ES2012/070481
(87) International publication number: WO 2013/007849

(56) References cited:
- EP-A1- 0 737 616
- US-A1- 2009 140 096
- Flight International: "BAe Jetsream 41", , 31 December 2006 (2006-12-31), XP002691712, Retrieved from the Internet: URL:http://www.flightglobal.com/airspace/m edia/civilaviation1949-2006cutaways/bae-je tstream-41-cutaway-7813.aspx [retrieved on 2013-02-06]

## Description

### FIELD OF THE INVENTION

The present invention relates to the rear fuselage of an aircraft with propeller engines and more particularly to a reinforced fuselage for withstanding impacts and damages due to failure events of the propeller engines.

### BACKGROUND OF THE INVENTION

There are known commercial aircrafts (CBA vector 123, SARA, AVANTI, 7J7) powered with propeller engines located in the rear part of the aircraft supported by the fuselage by means of pylons.

One of the problems raised by this aircraft configuration is related to failure events such as a PBR ("Propeller Blade Release") event, i.e. an event where a blade of one of the propeller engines comes off and hits the fuselage, an UERF ("Uncontained Engine Rotor Failure") event, i.e. an event where a part of the rotor of the engine brakes, it is released and hits the fuselage, an ice shedding event where ice shedding created in the tips of the blades can be thrown at high speed over the fuselage, or any other "Large Damage" event.

The design of said rear fuselage shall therefore take into account such events and guarantee its capability for maintaining stability and proceed to a safe landing, i.e. shall be an impact resistant and damage tolerant fuselage.

As a consequence of the failure in the engine one of the blades of the propeller engine or any other engine component can be detached and impact against the rear fuselage at high speed, sectioning it. In this emergency condition, the aircraft operates with only one engine generating a forward thrust outside the plane of symmetry of the airplane. This thrust causes a yawing moment which must be balanced with a side aerodynamic force caused by the vertical tail plane of the empennage, so that the aircraft can continue navigating stably. As the vertical tail plane is located above the rear fuselage, this side aerodynamic force generates a torsion along the rear fuselage. If the blade impacts against the fuselage and sections it, the torsional strength of the fuselage is considerably reduced because the torsional rigidity of a closed section is proportional to the total area enclosed by the section, whereas the torsional rigidity of an open section is proportional to the material area of the section.

Propeller engines may also be located in the wing such that the detachment of a propeller blade can impact the central fuselage in front of the wing. In this area of the fuselage, the torsion that the mentioned fuselage must support is relatively low, and do not involve a critical emergency condition. However, this condition changes when the propeller engines are located at the rear part of the aircraft in front of the empennage, because then the torque generated by the empennage due to the failure of an engine is very high and can cause a catastrophic situation for the aircraft which must be prevented.

WO 2009/068638 discloses an impact resistant fuselage made with composite materials comprising an outer skin and an inner skin, both skins being joined by means of radial elements configuring then a multi-cell structure providing the required torsional strength in the rear part of said aircrafts.

The present invention is also addressed to attend the aeronautical industry demand related to rear fuselages subjected to said failure events and propose a different solution than WO 2009/068638.

### SUMMARY OF THE INVENTION

It is an object of the present invention to provide an aircraft having attached a propulsion system to the rear fuselage by means of upstream pylons highly resistant to the torsional loads produced in case of a failure event such as a PBR event or an UERF event.

It is another object of the present invention to provide an aircraft having attached to the rear fuselage a propulsion system by means of upstream pylons having an impact resistant structure to withstand a failure event such as a PBR event, a UERF event or an ice shedding event.

It is another object of the present invention to provide an aircraft having attached to the rear fuselage a propulsion system by means of upstream pylons having a damage tolerant structure to withstand a failure event such as a PBR event, a UERF or an ice shedding event.

These and other objects are met by an aircraft according to claim 1.

In embodiments of the present invention, said resistant structure is a beam and the aircraft also comprises a non-resistant fairing shaped as a dorsal fin covering said beam. Hereby it is achieved an aircraft better prepared for facing said events because it provides an additional load path external to the fuselage without aerodynamical detrimental effects.

In embodiments of the present invention, said resistant structure comprises a beam and a resistant fairing shaped as a dorsal fin covering said beam. Hereby it is achieved an aircraft with a dual protection for facing said events.

In embodiments of the present invention said beam is connected, on one side, to the closer frame to the rear pressure bulkhead and, on the other side, to a junction of a rib with the frontal spar of the vertical tail plane. Therefore the connection points of the beam with the rear fuselage and the vertical tail plane are outside of the main area affected by said failure events.

In embodiments of the present invention, the angle between the longitudinal axis of said beam and an horizontal plane is comprised between 10º and 30º. In that position the beam covers a significant proportion of the risks associated a said failure events.

In embodiments of the present invention, said beam has one or more intermediate supports on the rear fuselage to prevent buckling. These intermediate supports can be easily placed inside the fairing that covers the beam so that they do not have any aerodynamical detrimental effect.

In embodiments of the present invention the transversal section of said beam is a closed-shaped section (preferably a tubular shape). The beam is therefore suitable shaped for withstanding tensile stresses.

In embodiments of the present invention with a resistant fairing, the fairing comprise a resistant skin and reinforcing elements suitable dimensioned for withstanding the loads foreseen for each type of fairing.

In embodiments of the present invention, the fairings can be single parts attached to the vertical tail plane and to the rear fuselage or extensions of the vertical tail plane.

Other characteristics and advantages of the present invention will be clear from the following detailed description of embodiments illustrative of its object in relation to the attached figures.

### DESCRIPTION OF THE DRAWINGS

Figures 1 a and 1 b show, respectively, lateral and plan schematic views of the rear part of an aircraft with propeller engines.
Figures 2a and 2b are, respectively, cross section and perspective schematic views of the rear fuselage of an aircraft according to the present invention.
Figure 3 is a schematic perspective view of the rear fuselage of an aircraft according to an embodiment of the present invention.
Figure 4 is a partial transversal section of Figure 3 showing in detail the resistant structure.
Figure 5 is a schematic perspective view of the rear fuselage of an aircraft according to another embodiment of the present invention.
Figure 6 is a partial transversal section of Figure 5 showing in detail the resistant structure.
Figure 7 is a partial transversal section showing in detail the resistant structure of another embodiment of the present invention.
Figure 8 is a schematic perspective view of the rear fuselage of an aircraft showing a dorsal fin as a single part attached to the fuselage and to the vertical tail plane.
Figure 9 is a schematic perspective view of the rear fuselage of an aircraft showing another embodiment of a dorsal fin as an extension of the vertical tail plane.

### DETAILED DESCRIPTION OF THE INVENTION

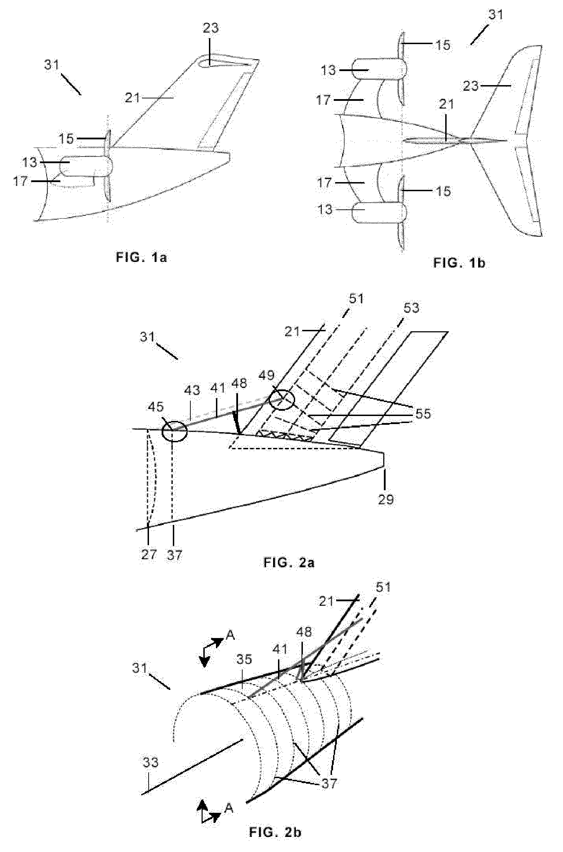

In the aircraft shown in Figures 1 a and 1b a propulsion system 13 with propeller blades 15 is attached to the rear fuselage 31 by means of upstream pylons 17 and the empennage comprises a vertical tail plane 21 and an upper horizontal tail plane 23 behind the propulsion system 13.

The vertical tail plane 21, attached to the rear fuselage 31, comprise a leading edge, a torsion box, a trailing edge, a root joint, and a tip. The torsion box comprise spars 51, 53, ribs 55 and left and right skins stiffened by stringers. The left and right skins are joined to the leading edge and to the trailing edge panels forming its aerodynamic contour.

The main structural elements of the rear fuselage 31, as in a typical aircraft fuselage, are the skin 35, the frames 37 and the stringers (not shown). The skin 35 is stiffened longitudinally with stringers to reduce the skin thickness, making it more competitive in terms of weight, while the frames 37 avoid the overall instability of the fuselage and can be subjected to the introduction of local loads.

Therefore, in the attaching areas of the vertical tail plane 21 and the pylons 17 the structural elements of the rear fuselage 31 and particularly the frames 37 are suitable designed for withstanding the loads introduced by them.

On the other hand, the rear fuselage 31 may also comprise other structural elements to provide the high torsional strength needed to deal with an event of a detachment of a propeller blade 15 from an engine of the propulsion system 13 causing on one side a torsion over the fuselage due to the yawing moment generated by the stop of the engine and the torque generated by the empennage to balance said yawing moment, and causing on the other side damages to the fuselage if the detached blade impacts on it that, obviously, reduce its torsional strength.

In this context, the basic idea of the present invention is adding a resistant structure connecting the vertical tail plane 21 with the rear fuselage 31 that acts as a redundant load path in said failure events.

In embodiments of the invention (see particularly Figures 2a and 2b) said resistant structure comprises a beam 41 connected, respectively, to a zone 45 of the fuselage and to a zone 49 of the torsion box of the vertical tail plane 21 which are located outside to the main trajectories foreseen for detached blades from the propulsion system 13 so that the beam 41 can act as an alternative load path for, for example, failure events affecting an area of the rear fuselage 31 that receives loads from the vertical tail plane 21.

In embodiments of the invention the fuselage zone 45 to which the beam 41 is connected is a zone located over the closer frame 37 to the rear pressure bulkhead 27 so that the load of the beam 41 can be translated directly to said frame 37. The attachment between the beam 41 and the frame 37 can be made using suitable fittings.

Similarly the zone 49 of the torsion box of the vertical tail plane 21 to which the beam 41 is connected is located over the junction of a rib 55 with the frontal spar 51 and the attachment between said elements can be made using suitable fittings.

Taking into account the above-mentioned requirements for the beam connection zones 45, 49 it is considered that the angle between the longitudinal axis of the beam 41 and an horizontal plane (i.e. a perpendicular plane to the symmetry plane A-A) is comprised between 10º and 3º.

In preferred embodiments said beam 41 has a closed-shaped transversal section and particularly a tubular shaped transversal section.

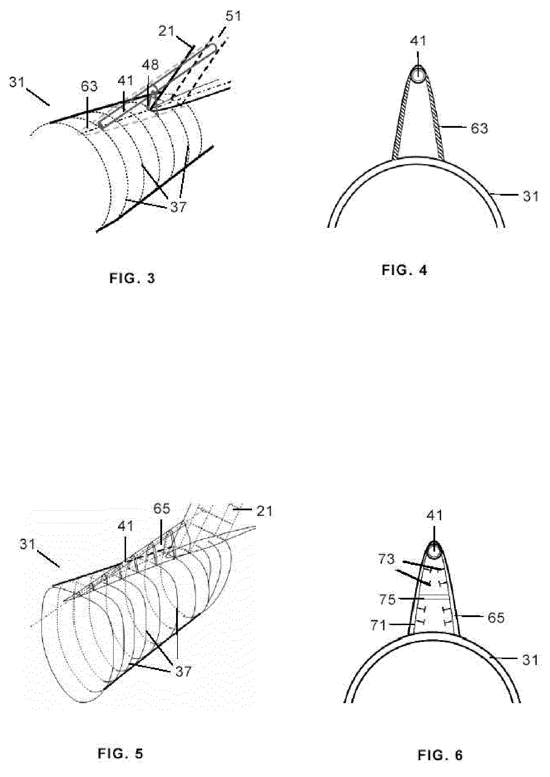

In embodiments of the invention (see particularly Figures 3 and 4) the beam 41 is covered by a non-resistant fairing 63 for, exclusively, aerodynamical purposes shaped as a dorsal fin, understanding for that an extension of the vertical tail plane 21 of a considerable length along the fuselage although its projection laterally outward from the fuselage may be lesser than the vertical tail plane lateral projection which is addressed to improve the directional stability of the aircraft.

As shown in Figure 4 the skin of the fairing 63 may have a sandwich structure.

In embodiments of the invention (see particularly Figures 5 and 6) the resistant structure comprises a beam 41 and a fairing 65 shaped as a dorsal fin having thus aerodynamical and resistant functions. In the embodiment shown in Figure 6 the fairing 65 comprises a resistant skin 71, T-shaped reinforcing stringers 73 and a web 75 in the higher section of the fairing close to the vertical tail plane 21.

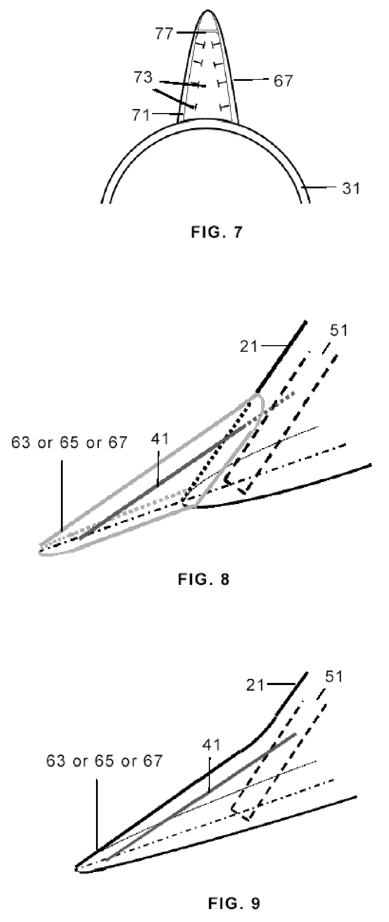

In embodiments of the invention (see particularly Figure 7) the resistant structure comprises only a dorsal fin shaped structure 67. In the embodiment shown in Figure 7 the structure 67 comprises a resistant skin 71, T-shaped reinforcing stringers 73 and a web 77 suitable dimensioned for complying with the resistance requirements. As the fairing 67 is the only component of the resistant structure it shall be joined to the rear fuselage 31 and to the vertical tail plane 21 by suitable joining means for load transfer purposes.

Said fairings 63, 63, 67 will be preferably arranged as single parts attached to the vertical tail plane 21 as illustrated in Figure 8, although they can also being arranged as extensions of the vertical tail plane 21 as illustrated in Figure 9 as happens with the dorsal fins incorporated in many known aircrafts.

In addition to said new load path, the resistant structure according to this invention produce the following technical effects:
- Increases the bending stiffness and strength of the rear fuselage 31 to achieve a damage tolerant structure capable to cope with the damages caused by the impact of a propeller blade 15 detached from an engine 13.
- Increases the sideforce of the vertical tail plane 21 and the stall angle.
- Provides a shield against the noise caused by the propulsion system 13.
- Provides a shield for ice shedding events.

Although the present invention has been fully described in connection with preferred embodiments, it is evident that modifications may be introduced within the scope thereof, not considering this as limited by these embodiments, but by the contents of the following claims.

## Claims

1. Aircraft having attached to the rear fuselage (31) a propulsion system (13) by means of upstream pylons (17); the aircraft comprising a vertical tail plane (21) attached to the rear fuselage (31); the rear fuselage (31) extending from a rear pressure bulkhead (27) to the aircraft tail (29), comprising a skin (35) and a plurality of frames (37, 37', 37") arranged perpendicularly to a central longitudinal axis (33), and having a curved shape with at least a vertical symmetry plane (A-A); the vertical tail plane (21) comprising a torsion box with left and right skins, frontal and rear spars (51, 53) and a plurality of ribs (55), the aircraft also comprises a resistant structure connecting said vertical tail plane (21) with the rear fuselage (31) that acts as a redundant load path in failure events of the propulsion system (13) that can produce damages in the rear fuselage (31) **characterised in that**:
- said resistant structure is a beam (41) and the aircraft also comprises a non-resistant fairing (63) shaped as a dorsal fin covering said beam (41), or
- said resistant structure comprises a beam (41) and a resistant fairing (65) shaped as a dorsal fin covering said beam (41).

2. Aircraft according to claim 1, wherein said propulsion system (13) is an open rotor system and said failure events comprise one or more of the following: a PBR event, an UERF event and an ice shedding event.

3. Aircraft according to any of claims 1-2, wherein said beam (41) is connected, on one side, to the closer frame (37) to the rear pressure bulkhead (27) and, on the other side, to a junction of a rib (55) with the frontal spar (51) of the vertical tail plane (21).

4. Aircraft according to any of claims 1-3, wherein the angle between the longitudinal axis of said beam (41) and an horizontal plane is comprised between 10º and 30º.

5. Aircraft according to any of claims 1-4, wherein said beam (41) has one or more intermediate supports (48) on the rear fuselage (31) to prevent buckling.

6. Aircraft according to any of claims 1-5, wherein the transversal section of said beam (41) is a closed-shaped section.

7. Aircraft according to claim 6, wherein said closed-shaped section has a tubular shape.

8. Aircraft according to any of claims 1-7 wherein said resistant fairing (65) comprises a skin (71) and reinforcing elements (73, 75).

9. Aircraft according to claim 1, wherein each of said fairings (63, 65) is a single part attached to the vertical tail plane (21) and to the rear fuselage (31).

10. Aircraft according to claim 1, wherein each of said fairings (63, 65) is an extension of the vertical tail plane (21).

## Patentansprüche

1. Flugzeug, an dessen hinterem Rumpf (31) ein Antriebssystem (13) mittels einer stromaufwärtigen Triebwerksaufhängung (17) befestigt ist; wobei das Flugzeug ein Seitenleitwerk (21) umfasst, das an dem hinteren Rumpf (31) befestigt ist; wobei sich der hintere Rumpf (31) von einem hinteren Druckschott (27) zum Flugzeugheck (29) erstreckt, umfassend eine Haut (35) und mehrere Rahmen (37, 37', 37''), die senkrecht zu einer zentralen Längsachse (33) angeordnet sind und eine gekrümmte Form mit mindestens einer vertikalen Symmetrieebene (A-A) aufweisen; wobei das Seitenleitwerk (21) einen Torsionskasten mit linken und rechten Häuten, vorderen und hinteren Holmen (51, 53) und mehreren Rippen (55) umfasst, wobei das Flugzeug auch eine widerstandsfähige Struktur umfasst, die das Seitenleitwerk (21) mit dem hinteren Rumpf (31) verbindet, das bei Fehlerereignissen des Antriebssystems (13), die Schäden an dem hinteren Rumpf (31) hervorrufen können, als ein redundanter Lastweg fungiert, **dadurch gekennzeichnet, dass**:
- die widerstandsfähige Struktur ein Träger (41) ist und das Flugzeug auch eine nicht widerstandsfähige Verkleidung (63) umfasst, die als eine Rückenflosse geformt ist, die den Träger (41) abdeckt, oder
- die widerstandsfähige Struktur ein Träger (41) ist und eine das Flugzeug auch eine widerstandsfähige Verkleidung (65) umfasst, die als eine Rückenflosse geformt ist, die den Träger (41) abdeckt.

2. Flugzeug nach Anspruch 1, wobei das Antriebssystem (13) ein offenes Rotorsystem ist und die Fehlerereignisse ein oder mehrere der folgenden Ereignisse umfassen: ein PBR-Ereignis, ein UERF-Ereignis und ein Eiswurfereignis.

3. Flugzeug nach einem der Ansprüche 1 bis 2, wobei der Träger (41) auf einer Seite mit dem näher gelegenen Rahmen (37) zum hinteren Druckschott (27) verbunden ist und auf der anderen Seite mit einer Verbindungsstelle einer Rippe (55) mit dem vorderen Holm (51) des Seitenleitwerks (21) verbunden ist.

4. Flugzeug nach einem der Ansprüche 1 bis 3, wobei der Winkel zwischen der Längsachse des Trägers (41) und einer horizontalen Ebene zwischen 10° und 30° liegt.

5. Flugzeug nach einem der Ansprüche 1 bis 4, wobei der Träger (41) ein oder mehrere Zwischenstützen (48) an dem hinteren Rumpf (31) aufweist, um eine Knickbildung zu verhindern.

6. Flugzeug nach einem der Ansprüche 1 bis 5, wobei der Querabschnitt des Trägers (41) ein geschlossen geformter Abschnitt ist.

7. Flugzeug nach Anspruch 6, wobei der geschlossen geformte Abschnitt eine röhrenförmige Form aufweist.

8. Flugzeug nach einem der Ansprüche 1 bis 7, wobei die widerstandsfähige Verkleidung (65) eine Haut (71) und Verstärkungselemente (73, 75) umfasst.

9. Flugzeug nach Anspruch 1, wobei jede der Verkleidungen (63, 65) ein einziges Teil ist, das an dem Seitenleitwerk (21) und dem hinteren Rumpf (31) befestigt ist.

10. Flugzeug nach Anspruch 1, wobei jede der Verkleidungen (63, 65) eine Verlängerung des Seitenleitwerks (21) ist.

## Revendications

1. Aéronef comportant un système de propulsion (13) fixé au fuselage arrière (31) au moyen de pylônes amonts (17) ; l'aéronef comprenant un plan fixe vertical (21) fixé au fuselage arrière (31) ; le fuselage arrière (31) s'étendant d'une cloison de pressurisation arrière (27) à la queue (29) d'aéronef, comprenant un revêtement (35) et plusieurs couples principaux (37, 37', 37'') disposés perpendiculairement à un axe longitudinal central (33), et ayant une forme courbée avec au moins un plan de symétrie verticale (A-A) ; le plan fixe vertical (21) comprenant un caisson de torsion doté de revêtements gauche et droit, de longerons avant et arrière (51, 53) et de plusieurs nervures (55), l'aéronef comprenant également une structure résistante reliant ledit plan fixe vertical (21) et le fuselage arrière (31) qui sert de trajet de charge redondante lors d'événements de défaillance du système de propulsion (13), qui peuvent avoir pour conséquence des endommagements du fuselage arrière (31), **caractérisé en ce que** :
- ladite structure résistante est une poutre (41) et l'aéronef comprend également un carénage non résistant (63) formé en tant que dérive dorsale recouvrant ladite poutre (41), ou
- ladite structure résistante comprend une poutre (41) et un carénage résistant (65) formé en tant que dérive dorsale recouvrant ladite poutre (41).

2. Aéronef selon la revendication 1, dans lequel ledit système de propulsion (13) est un système de rotor ouvert et lesdits événements de défaillance comprennent un ou plusieurs des événements suivants : un événement de PBR (pour *Propeller Blade Release,* perte de pale d'hélice), un événement d'UERF (pour *Uncontained Engine Rotor Failure,* défaillance de moteur de rotor non contenue) et un événement de projection de givre.

3. Aéronef selon l'une quelconque des revendications 1 ou 2, dans lequel ladite poutre (41) est reliée, d'un côté, au couple principal plus proche (37) de la cloison de pressurisation arrière (27) et, de l'autre côté, à une jonction d'une nervure (55) avec le longeron avant (51) du plan fixe vertical (21).

4. Aéronef selon l'une quelconque des revendications 1 à 3, dans lequel l'angle entre l'axe longitudinal de ladite poutre (41) et un plan horizontal est compris entre 10° et 30°.

5. Aéronef selon l'une quelconque des revendications 1 à 4, dans lequel ladite poutre (41) comporte un ou plusieurs supports intermédiaires (48) situés sur le fuselage arrière (31) dans le but d'empêcher un flambage.

6. Aéronef selon l'une quelconque des revendications 1 à 5, dans lequel la section transversale de ladite poutre (41) est une section de forme fermée.

7. Aéronef selon la revendication 6, dans lequel ladite section de forme fermée a une forme tubulaire.

8. Aéronef selon l'une quelconque des revendications 1 à 7, dans lequel ledit carénage résistant (65) comprend un revêtement (71) et des éléments de renfort (73, 75).

9. Aéronef selon la revendication 1, dans lequel chacun desdits carénages (63, 65) est une partie unique fixée au plan fixe vertical (21) et au fuselage arrière (31).

10. Aéronef selon la revendication 1, dans lequel chacun desdits carénages (63, 65) est un prolongement du plan fixe vertical (21).
